# EUROPEAN PATENT APPLICATION

(11) **EP 2 536 009 A1**
(43) Date of publication of application: **19.12.2012**
(21) Application number: 11739345.4
(22) Date of filing: 09.02.2011
(51) Int. Cl.: H02K 21/24, H02N 15/00

(54) **MAGNETIC LEVITATION SUPPORTING STRUCTURE FOR VERTICAL SHAFT DISC-TYPE MOTOR**

(30) Priority: 08.02.2010 CN 201019114065
(71) Applicant: National Wind Energy Co. Ltd., Pinggu District, Beijing 101206 (CN)
(72) Inventor: JIANG, Dalong, Beijing 101206 (CN); WANG, Jianhui, Beijing 101206 (CN)
(74) Representative: Ring & Weisbrodt
(86) International application number: PCT/CN2011/000200
(87) International publication number: WO 2011/095066

(57) **Abstract**

The present invention discloses a maglev support structure used for vertical axis disc-type electric machine. The said maglev support structure includes at least two maglev components, of which the first maglev component is composed of an annular upper permanent-magnet component and an annular lower permanent-magnet component, where the upper permanent-magnet component is installed under the upper end cover of the rotor while the lower permanent-magnet component is installed above the stator, with the upper and lower permanent-magnet components being in the opposite magnetization direction and in a state of mutual repulsion, resulting in a pushing force; and the second maglev supporting component is composed of an upper and a lower permanent-magnet components where the upper permanent-magnet component is installed above the lower end cover of the rotor while the lower permanent-magnet component is installed under the stator, with the upper and lower permanent-magnet components being in the opposite magnetization direction and in a state of mutual repulsion, resulting in a pushing force.

## Description

### Technical field

The present invention relates to a magnetic levitation (maglev) support structure used for vertical axis disc-type electric machine as well as a vertical axis disc-type electric machine provided with the said magnetic levitation support structure, which belong to the technical field of electric

### Background art

A disc-type electric machine is a widely applied electric machine, for example, electric motor of electric bicycle, gearless traction electric motor and wind turbo-generator, etc. In the actual applications, the revolution axis of a disc-type electric machine is often vertically arranged, which is thus called vertical axis (or vertical) disc-type electric machine.

The weight of the rotor assembly of a disc-type electric machine needs to be supported through a thrust bearing to overcome the gravity force. When the weight of a rotor of an electric machine is relatively big, the support by means of a thrust bearing may result in a high frictional force, adding to the friction brake torque, shortening the service life of the bearing. On the other hand, as a result of flattening of disc-type electric machines, the thickness of the stator becomes very thin, which causes the outside to bend downward under the action of gravity force when the disc is very big, leaving a relatively big air gap between the stator and rotor, further reducing the efficiency of the electric machine. This might hinder the large-scaling development of disc-type electric machines. To solve this problem, people came up with the idea of support by using magnetic repulsion force, which helped eliminate the mechanical friction force. For example, a Chinese utility model patent numbered ZL 200820126507.1 has disclosed a maglev device used for vertical axis wind turbine, in which the main axis of the generator rotor is placed inside the support with the upper magnet placed under the main axis and the lower magnet placed inside the cavity on the support formed with the bottom of the main axis, where the lower magnet is placed under the upper magnet and provided opposite to the upper magnet in the same polarity. Since the maglev device is placed under the main axis of the generator, the upper magnet and the main axis of the generator above the upper magnet receive the upward magnetic field force resulted from magnet homopolarity repulsion, which partially offsets the compression received by the bearing, reducing the rotational resistance moment of the generator, thus, improving the power generation efficiency, reducing the starting wind velocity of the rotor, and meanwhile, prolonging the service life of the bearing.

Furthermore, another Chinese utility model patent numbered ZL 200820024546.0 has disclosed a maglev paddle-distance self-regulating vertical axis wind turbine. It includes a maglev wind turbine with the generator axis integrated with the rotor axis, and the generator axis is inserted into the generator casing, the generator rotor is installed on the generator axis, and the generator stator is installed on the generator casing corresponding to it, and also installed on the generator axis and inside the generator casing are axial maglev device and radial maglev device which are used for maglev orientation. The axial maglev device comprises a fixed disk provided at the top end inside the generator casing, which is fixed with the generator axis, provided on the fixed disk is at least one annular axial upper magnet, and a corresponding axial lower magnet is provided on the generator casing to correspond with it. The radial maglev device comprises at least one radial inner magnet installed on the generator axis as well as a corresponding radial outer magnet installed on the generator casing to correspond with it.

### Description of the present invention

The top priority technical problem that must be solved by the present invention is to provide a maglev support structure used for the vertical axis disc-type electric machine

Another technical problem that must be addressed by the present invention is to provide a vertical axis disc-type electric machine using the aforesaid maglev support structure.

To fulfill the aforesaid invention purposes, the following technical solutions are adopted in the present invention.

A maglev support structure to be used for vertical axis disc-type electric machine, wherein:
said maglev support structure at least includes two maglev supporting components, of which the first maglev component is composed of a first annular upper permanent-magnet component and a first annular lower permanent-magnet component, where the first upper permanent-magnet component is installed under inner side of the upper end cover of the rotor while the first lower permanent-magnet component is installed above the inner side of the stator, with the first upper permanent-magnet component being in the opposite magnetization direction to the first lower permanent-magnet component in a state of mutual repulsion, resulting in a pushing force; the second maglev supporting component is composed of a second annular upper permanent-magnet component and a second lower permanent-magnet component, where the second upper permanent-magnet component is installed above the outer side of the lower end cover of the rotor while the second lower permanent-magnet component is installed under the outer side of the stator, with the second upper permanent-magnet component being in the opposite magnetization direction to the second lower permanent-magnet component in a state of mutual repulsion, resulting in a pushing force.

The upper and lower permanent-magnet components are both composed of yoke iron and permanent-magnet, with two or more permanent magnets being placed above or under an annular yoke iron along the radial direction in a polarity interweaving manner to form stacked loops of permanent-magnets along the radial direction in a polarity interweaving manner.

The upper and lower permanent-magnet components are respectively installed on the stator and rotor sides, with the upper and lower permanent-magnets vertically aligned and in the opposite magnetization direction to form a pushing force.

For each layer of permanent magnet of the said stacked loops of permanent magnets, two or more permanent magnets are arranged in the same polarity along the circumference, which are then connected with the annular yoke iron.

### A brief description of drawings

The following is a further detailed description of the present invention in conjunction with the drawings and specific embodiments, and in the drawings, the same designation is given to the same component.
Fig. 1 is a cutaway view of a vertical axis disc-type electric machine utilizing a maglev support structure according to an implementation example of the present invention;
Fig. 2 is a radial cutaway view of a maglev support component in the present invention;
Fig. 3 through Fig. 9 are cutaway views of a vertical axis disc-type electric machine using maglev structures according to other several embodiments of the present invention;
Fig. 10 is a cutaway view of a vertical axis disc-type electric machine using a maglev support structure according to one implementation example of the present invention;
Fig. 11 is a cutaway view of a vertical axis disc-type electric machine using a maglev support structure according to another implementation example of the present invention.

### Detailed description of the preferred embodiments

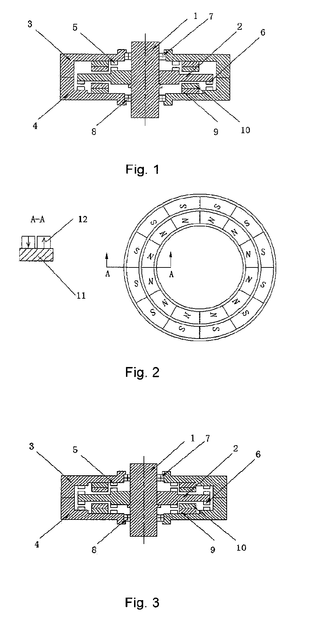

The vertical axis disc-type electric machine described in the present invention may be an ironless disc-type external rotor permanent-magnet generator. As shown in Fig. 1, this generator mainly comprises revolution axis 1, stator 2, rotor upper end cover 3, rotor lower end cover 4, the first maglev component 5, the second maglev component 6, upper bearing 7, lower bearing 8, yoke iron 9 and permanent magnet 10. Under the upper end cover of the rotor are installed yoke iron 9 and permanent magnet 10 while above the lower end cover of the rotor are installed yoke iron 9 and permanent magnet 10. The permanent magnets on the upper and lower end covers adopt axial excitation and are arranged along the circumference in a polarity interweaving manner, while the opposite permanent magnets of the upper and lower end covers have the same magnetization direction and are mutually attractive. Inside stator 2 is fixed an armature coil distributed along the circumference, and the axis around which the said armature coil is wound is also a vertical axis. A closed magnetic circuit is formed by upper end cover yoke iron, upper end cover permanent magnet, air gap between the upper end cover and the stator, stator, air gap between the lower end cover and the stator, lower end cover permanent magnet and the lower end cover yoke iron. After the rotor turns, the magnetic fluxes surrounded by the armature coil undergo an alternation, and an electric potential is produced by the armature coil, which is then connected to an external circuit for outputting electric energy.

The ironless disc-type external rotor permanent-magnet generator shown in Fig. 1 is only one embodiment of vertical axis disc-type electric machine. In reality, such vertical axis disc-type electric machine can be operated as a generator or as an electric motor; its stator and rotor structure may be a radial magnetic structure with iron core and gullet; its excitation method may be permanent magnet or electric excitation; its stator and rotor may also be in relative state, and their structure may be as such: the external end cover is stator, the internal coil is rotor. There are many other similar embodiments, which will not be described herein.

The maglev structures adopted in prior art are mostly capable of meeting the support requirements of small-scale and light-duty vertical axis electric machines, thus, those maglev structures generally adopts single-loop support where the pushing force produced is relatively small, however, with respect to the thrust support for heavy-duty and high-power vertical axis electric machine, multiple-loop support method has to be adopted in conjunction with the structural characteristics of the present type of electric machine, so that the maglev thrust support can be realized by more than two (including two) maglev components.

The maglev support structure described in the present invention includes at least two maglev supporting components, wherein, the first maglev component is composed of the upper and lower annular permanent-magnet components 5, where the upper permanent-magnet component is installed under the inner side of the upper end cover 3 while the lower permanent-magnet component is installed above the inner side of stator 2, with the upper and lower permanent-magnet components in opposite magnetization direction and in a state of mutual repulsion, enabling the rotor comprising the upper end cover and lower end cover to overcome the gravity force and suspend; the second maglev supporting component is composed of the upper and lower permanent-magnet components 6, where the upper permanent-magnet component is installed above the outer side of the lower end cover 4 of the rotor while the lower permanent-magnet component is installed under the outer side of stator 2, with the upper and lower permanent-magnet components in the opposite magnetization direction and in a state of mutual repulsion, resulting in a pushing force, enabling the outer side of the stator to overcome the gravity force under the action of this magnetic buoyancy without bending downward. These two maglev supporting components enabling the rotating part of the entire rotor to overcome the levitation status of the gravity force, with the upper bearing 7 and bearing 8 only under radial load, thus, reducing the moment of rotational resistance.

Fig. 2 is a radial cutaway view of the maglev supporting component in Fig. 1. This cutaway view is cut away by a plane through the center axis. The maglev supporting component is composed of the upper permanent-magnet component and the lower permanent-magnet component which form an annular structure with an air gap existing between the upper and lower permanent-magnet components. It can be made of rare earth permanent-magnetic materials such as Nd-Fe-B permanent magnet. The dashed area in the figure represents maglev yoke iron 11, which enables the magnetic field of the neighboring permanent-magnet on the same permanent magnet to form a magnetic circuit with a relatively low magnetic resistance via the yoke iron on one side, adding to the magnetic induction intensity of the magnetic field, thus, strengthening the repulsive force between the upper and lower permanent-magnet components. The object bearing an arrow in the figure is the maglev permanent-magnet 12, and what is shown in Fig. 2 is only one embodiment of 2 pieces of permanent magnets in an alternative arrangement. In reality, the upper and lower permanent-magnet components are composed of yoke iron and permanent magnet, where two or more permanent magnets are alternatively arranged above and under the annular yoke iron per their polarity along the radial direction to form multiple loops of permanent magnets arranged with alternative polarities along the radial permanent magnet. The upper and lower permanent components are respectively installed on the sides of the stator and rotor, with the upper and lower permanent magnets vertically aligned and in the opposite magnetization direction to result in a repulsive force. For each layer of permanent magnet of the said stacked loops of permanent magnets, two or more permanent magnets are arranged above or below the annular yoke iron in the same polarity along the circumference. The maglev permanent magnet 12 may be attached onto the yoke iron through glue bonding or any other mechanical method. And the yoke iron may be attached with the upper end cover, lower end cover or the stator through glue bonding or any other mechanical method.

Figs. 3 thru 9 illustrate other embodiments of the maglev support structure according to this present invention.

In Fig. 3, four maglev components each composed of an upper and a lower permanent-magnet components are adopted, of which the first maglev supporting component has its lower permanent-magnet component located above the inner side of the stator and upper permanent-magnet component located under the inner side of the upper end cover; the second maglev supporting component has its upper permanent-magnet component located under the inner side of the stator and lower permanent-magnet component located above the inner side of lower end cover; the third maglev supporting component has its upper permanent-magnet component located under the outer side of the stator and the lower permanent-magnet component located above the outer side of the lower end cover; the fourth maglev supporting component has its upper permanent-magnet component located above the outer side of the stator and the lower permanent-magnet component located under the outer side of the upper end cover. The upper and lower permanent-magnet components of the first maglev supporting component and the second maglev supporting component are placed in the opposite magnetization direction and in a state of mutual repulsion, enabling the rotor comprising the upper end cover and the lower end cover to overcome the gravity force to suspend; the upper and lower permanent magnet components of the third maglev supporting component and the fourth maglev supporting component are placed in the opposite magnetization direction and in a state of mutual repulsion, resulting in a pushing force, enabling the outer side of the stator to overcome the gravity force under the action of this magnetic buoyancy and do not bend downward.

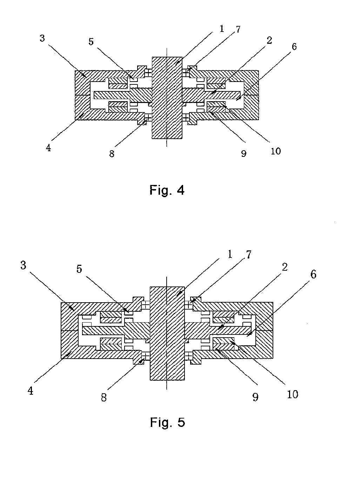

In Fig. 4, the third and the fourth maglev supporting components shown in Fig. 3 are omitted.

In Fig. 5, the third maglev supporting component shown in Fig. 3 is omitted.

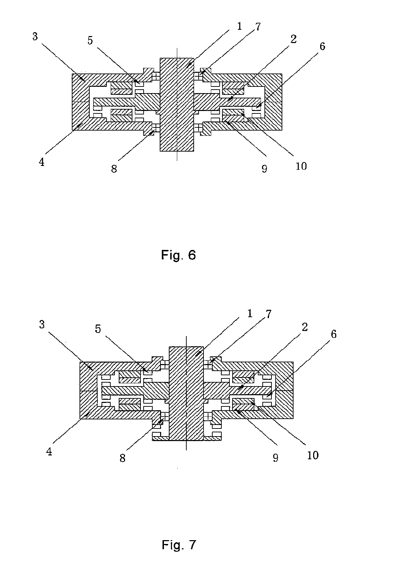

In Fig. 6, the fourth maglev supporting component shown in Fig. 3 is omitted.

In Fig. 7, an extra maglev supporting component is added to the lower end cover of the rotor near the axis on the basis of Fig. 3, which is used as an supplement to the rotor cover for its overcoming of the gravity force.

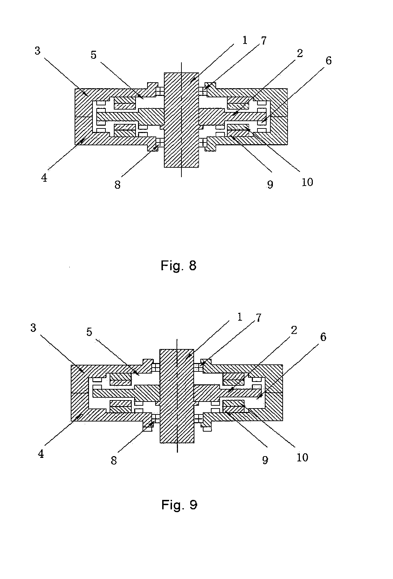

In Fig. 8, the first maglev supporting component shown in Fig. 3 is omitted.

In Fig. 9, the first and the fourth maglev components shown in Fig. 3 are omitted.

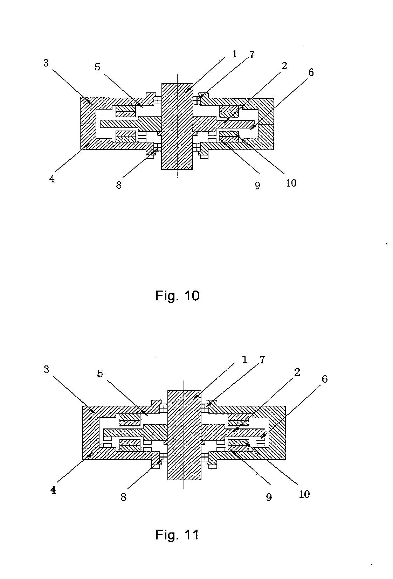

Fig. 10 shows another form of the maglev supporting component according to the present invention. In Fig. 10, the vertical axis disc-type electric machine utilizes an internal rotor, with the upper stator cover and lower stator cover fixed on the axis, and a maglev supporting component is adopted between the rotor and the lower stator cover, which is used for overcoming the gravity force of the rotor.

Fig. 11 shows another form of the maglev supporting component according to the present invention. Just like Fig. 10, the vertical axis disc-type electric machine shown in Fig. 11 also utilizes an internal rotor, with the upper stator cover and the lower stator cover fixed on the axis, and two maglev supporting components are used between the rotor and the lower stator cover, which are used for overcoming the gravity force of the rotor.

The above has been a detailed description of the maglev support structure used for vertical axis disc-type electric machine provided by the present invention. For the technical personnel from this field, it is obvious that any change to it without getting rid of the substantial spirit of the present invention will fall into the scope of the patent right of the present invention.

## Claims

1. A maglev support structure used for vertical axis disc-type electric machine, wherein:
said maglev support structure at least includes two maglev components, of which the first maglev component is composed of a first annular upper permanent-magnet component and a first annular lower permanent-magnet component, with the first upper permanent-magnet component installed under the upper end cover of the rotor while the first lower permanent-magnet component installed above the stator, where the upper and lower permanent magnet components are in the opposite magnetization direction and in a state of mutual repulsion, resulting in a pushing force; the second maglev supporting component is composed of a second annular upper permanent-magnet component and a second annular lower permanent-magnet component, with the second upper permanent-magnet component installed above the lower end cover of the rotor while the second lower permanent-magnet component installed under the stator, where the second upper permanent-magnet component and the second lower permanent-magnet component are placed in the opposite magnetization direction and in a state of mutual repulsion, resulting in a pushing force.

2. The maglev support structure of Claim 1, wherein:
the first upper permanent-magnet component is installed under the inner surface of the upper end cover of the rotor while the first lower permanent-magnet component is installed above the inner surface of the stator.

3. The maglev support structure of Claim 1, wherein:
the first upper permanent-magnet component is installed under the outer side of the upper end cover of the rotor while the first lower permanent-magnet component is installed above the outer side of the stator.

4. The maglev support structure of Claim 1, wherein:
the second upper permanent-magnet component is installed above the inner side of the lower end cover of the rotor while the second lower permanent-magnet component is installed under the inner side of the stator.

5. The maglev support structure of Claim 1, wherein:
the second upper permanent-magnet component is installed above the outer side of the lower end cover of the rotor while the second lower permanent-magnet component is installed under the outer side of the stator.

6. The maglev support structure of Claim 1, wherein:
said maglev support structure may also include one maglev supporting component, whose upper permanent-magnet component is installed under the inner side of the lower end cover and lower permanent-magnet component is attached onto a supporting body installed on the axis.

7. The maglev support structure of Claim 1, wherein:
the upper and lower permanent-magnet components are composed of yoke iron and permanent magnet, where two or more permanent magnets are arranged above and under the annular yoke iron in an alternative manner per their polarities along the radial direction to form stacked loops of permanent magnets arranged in an alternative manner with reference to the polarity of the permanent magnets; and/or wherein
the upper and lower permanent components are respectively installed on the sides of the stator and rotor, with the upper and lower permanent magnets vertically aligned and in the opposite magnetization direction to result in a repulsive force; and/or wherein
for each layer of permanent magnet of said stacked loops of permanent magnets, two or more permanent magnets are arranged in the same polarity along the circumference, which are then connected with the annular yoke iron.

8. A vertical axis disc-type electric machine, wherein:
said vertical axis disc-type electric machine utilizes the maglev support structure of any of Claims 1 to 7.
